# EUROPEAN PATENT APPLICATION

(11) **EP 1 375 952 A2**
(43) Date of publication of application: **02.01.2004**
(21) Application number: 03254014.8
(22) Date of filing: 25.06.2003
(51) Int. Cl.: F16D 65/097

(54) **Pad spring and disc brake incorporating a pad spring**

(30) Priority: 26.06.2002 GB 0214705
(71) Applicant: Meritor Heavy Vehicle Braking Systems (UK) Limited, Cwmbran, Gwent NP44 3XU (GB)
(72) Inventor: Royston, Leonard Morris, Rogerstone, Newport NP10 0DN (GB)
(74) Representative: Jones, John Bryn

(57) **Abstract**

A pad spring (138) for fitment to a brake carrier (112) of a disc brake (10) so as to be capable of resiliently restraining one end of a disc brake pad (135) in the carrier from movement in a radially outward and/or inward direction.

## Description

The present invention relates to a pad spring and to a disc brake incorporating a pad spring. More particularly, the present invention relates to a pad spring for fitment to a pad carrier of a disc brake.

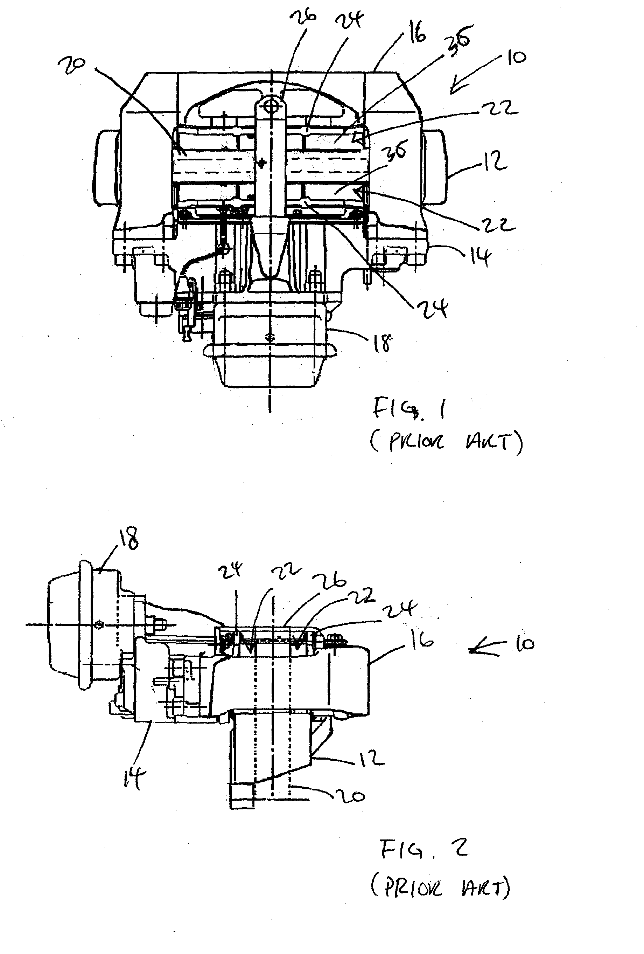

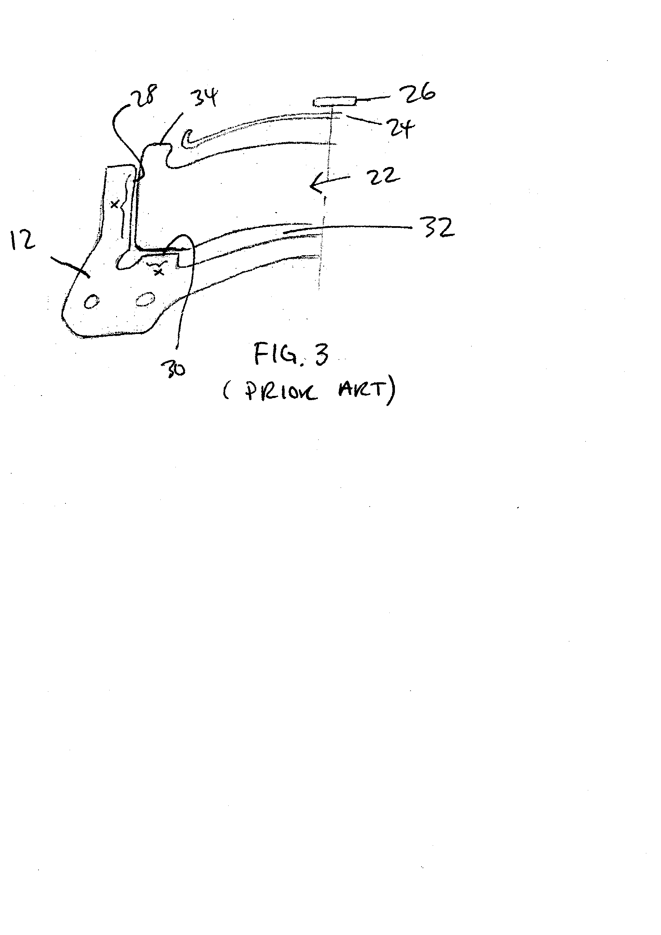

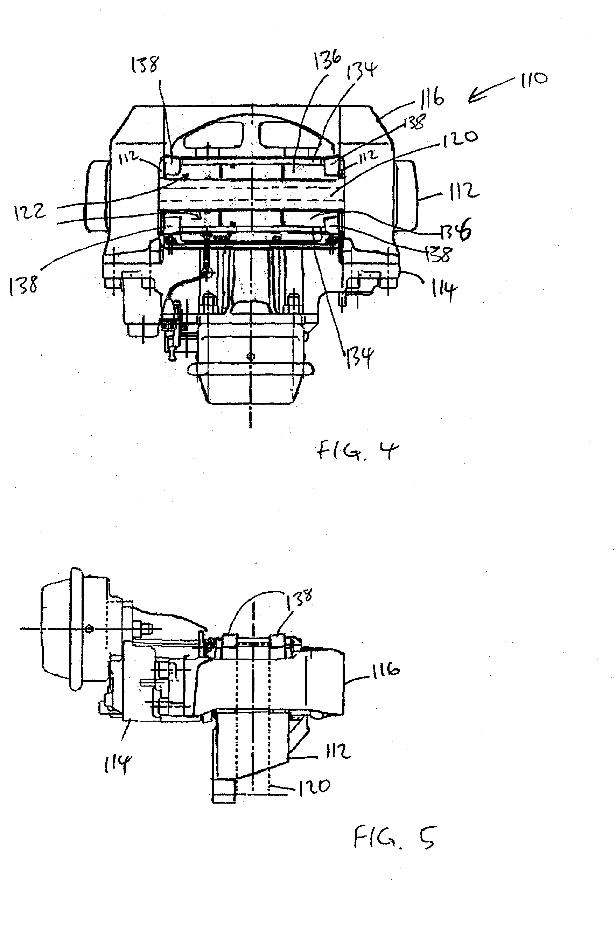

Known disc brakes (shown in Figures 1 to 3) comprise a disc or rotor 20 mounted to a wheel hub for rotation with a vehicle wheel. A brake carrier 12, made from cast iron or steel, is fixed relative to the axis of rotation of the rotor 20 and is secured to a non-rotating portion of the vehicle (e.g. the vehicle suspension). A brake caliper comprising a bridge 16 secured to a housing 14 is slidably mounted on the carrier 12 to allow for movement parallel to the axis of rotation of the rotor 20. An actuator 18 communicates with one or more pistons or tappets (not shown) provided in housing 14 to apply the force required for the brake to function.

A pair of brake pads 22 comprising friction material 36 mounted to a solid stamped, cut or cast iron or steel backplate 34 are positioned either side of the rotor 20 with the friction material facing the planar faces of the rotor. The backplates 34 of the pads 22 are seated on vertical and horizontal abutment regions 28 and 30 respectively provided in openings 32 of the carrier 12 to restrain the pads 22 from rotational and radially inward movement respectively. In a typical floating caliper type brake, one of the backplates 34 engages with the piston(s), either directly or via a spreader plate to distribute the load. Braking is achieved by the actuator causing the piston(s) to push one of the pads 22 towards the rotor 20. Because the caliper is able to "float" on the carrier, this causes an equal frictional braking load to be applied by both pads.

Radially outward movement of the pads 22 is restricted by virtue of elongate pad springs 24 which seat in formations provided in the upper edge of the backplate and which are held down at their approximate centre by a pad strap 26 which spans an opening between the bridge 16 and housing 14. The resilient restraint provided by the pad springs 24 limits the tendency of the pads 22 to rattle against abutment regions 28 and 30 when a braking load is applied, or the vehicle to which the brake is fitted is driving along an uneven surface. The restraint however permits axial movement of the pads towards the rotor under braking.

Despite the provision of pad springs 24, it has hitherto been preferable to harden and machine areas X of the regions 28 and 30 in order to limit damage that may be caused to the carrier 12 by repeated impacts of the backplate 34 therewith (due to vibrations caused by uneven road surfaces and the like in a primarily radial direction, and brake drag forces in a circumferential direction) which would otherwise shorten the service life of the carrier 12.

This need for machining and hardening, as well as the need to provide a pad strap 26 inevitably increases the cost of the overall disc brake assembly, and results in a bulkier brake.

The present invention seeks to overcome or at least mitigate the problems of the prior art.

One aspect of the present invention provides a pad spring for fitment to a brake carrier of a disc brake so as to be capable of resiliently restraining one end of a disc brake pad in the carrier from movement in a radially outward and/or inward direction.

Embodiments of the present invention will now be described, by way of example only, with reference to the accompanying drawings in which:
Figure 1 is a plan view of a prior art disc brake assembly;
Figure 2 is a side elevation of the assembly of Figure 1;
Figure 3 is an exploded view of a portion of the carrier and one brake pad and a pad spring of Figures 1 and 2;
Figure 4 is a plan view of a disc brake assembly incorporating a pad spring according to the first embodiment of the present invention;
Figure 5 is a side elevation of the assembly of Figure 4;
Figure 6 is an exploded view of a portion of the carrier, and one brake pad and pad spring of Figures 4 and 5;
Figure 7 is a perspective view of the pad spring of Figure 6;
Figure 8 is an exploded view of a portion of a carrier and brake pad with a pad spring according to a second embodiment of the present invention;
Figure 9 is an exploded view of a portion of a carrier and brake pad with a pad spring according to a third embodiment of the present invention;
Figure 10 is a perspective view of a component for use with a fourth invention of the present invention;
Figure 11 is an exploded view of a portion of a carrier and brake pad with a pad spring according to a fifth embodiment of the present invention;
Figures 12 and Figure 13a are views of a pad spring and pin according to a sixth embodiment of the present invention;
Figure 13b is a pin according to a seventh embodiment of the present invention;
Figure 14 is an exploded perspective view of a portion of a carrier with a pad spring according to an eighth embodiment of the present invention;
Figure 15 is an exploded perspective view of a portion of a carrier with a pad spring according to an ninth embodiment of the present invention;
Figure 16 is a plan view of a disc brake assembly incorporating pad springs according to a tenth embodiment of the present invention;
Figure 17 is a side elevation of the assembly of Figure 16; and
Figure 18 is a perspective view of one of the pad springs shown in Figures 16 and 17.

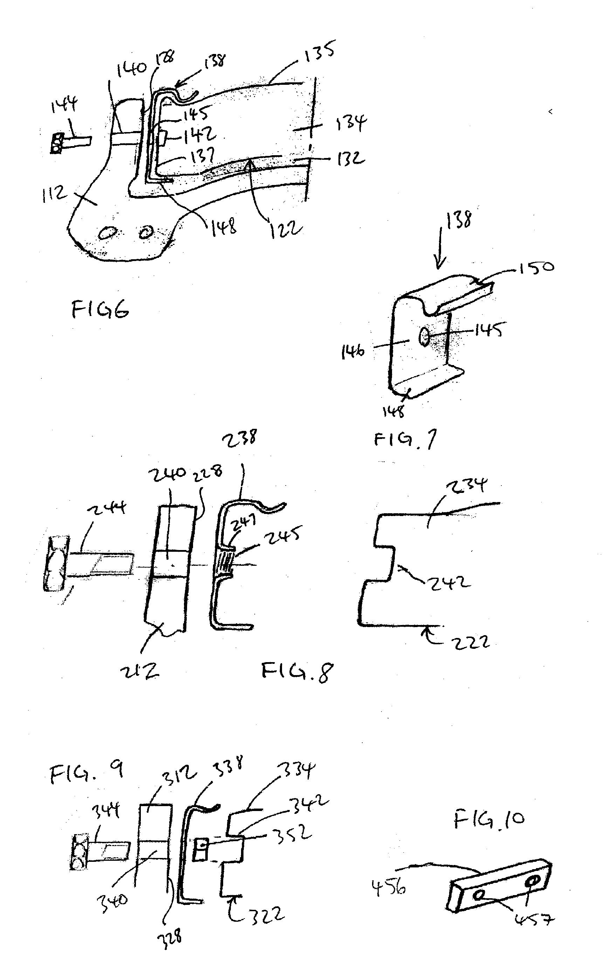

Referring to Figures 4, 5 and 6, a disc brake assembly 110 incorporating pad springs 138 according to a first embodiment of the present invention is shown. Where possible like numerals have been used for equivalent parts to the prior art assembly with the addition of the prefix "1".

It can be seen from Figures 4 and 5 that the conventional pad springs have been dispensed with and replaced by four pad springs 138 according to an embodiment of the present invention. Since the pad springs 138 are fitted at each end of the brake pads, the pad strap 26 of the prior art is unnecessary, and has been dispensed with. Other than the adaptations described herein for fitment of the pad springs of the present invention, the brake pads, caliper, carrier and rotor used with the pad springs of the present invention are largely conventional.

Turning to Figures 6 and 7, both the shape of the pad springs 138 and their means of securement to brake carrier 112 can more easily be seen. In this embodiment, the pad spring comprises a vertical abutment surface 146 arranged to contact a corresponding vertical surface 128 of the carrier and having a through bore 145 provided therein. A horizontal pad support leg 148 extends from the lower edge of the vertical abutment surface 146 at substantially 90 degrees thereto, and a spring portion 150 of the pad spring extends from an upper edge of the vertical abutment surface in substantially the same direction as the lower abutment surface. In this embodiment the support leg 148 provides a cantilevered support of the lower edge of the pad. In other embodiments the support leg 148 may act as an abutment surface disposed between the pad and a surface of the carrier. In this embodiment, the spring portion 150 has been formed to engage with a recess provided at one end of the upper face 135 of the backplate 134.

The pad springs 138 are preferably manufactured from spring steel or any other material having suitably resilient properties. It has been found that for abutment and support surfaces to function effectively, their hardness has to be higher or lower than that of the brake pad backplate 134 with which they will be used. As such, abutment and support surfaces 146 and 148 may be made from an inherently tough or hard material (relative to the material of the backplate 134 of brake pad 112) and/or may be heat treated, induction treated or worked to impart the necessary toughness and/or hardness to withstand impact loads from the backplate 134 when in use. Radial impact loads (on surface 148) occur primarily due to vibration of the brake during vehicle motion. Circumferential loads occur primarily due to drag forces on the pad when the brake is applied.

Alternatively, surfaces 146 and 148 may be formed from an inherently soft and malleable material (relative to the material of the backplate 134) left untreated to simply act as sacrificial material that may be replaced once the associated pad 122 is worn out and also replaced. In a preferred embodiment, the pad springs 138 are formed integrally from a single piece of material. The spring abutment and support surfaces 146 and 148 are preferably harder than the carrier and/or pad backplate. A suitable range of hardness in the abutment and/or support region has been found to be 380 to 560 HB.

Each brake pad 122 is preferably fitted into carrier 112 by first clipping the pad springs 138 to either end of the backplate 134 in the position shown in Figure 6. The pads 122 and pad springs 138 are then slid into the openings 132 provided in carrier 112 until the hole 145 in the spring 138 is aligned with a through bore 140 on the carrier. An attachment bolt 144 is then fitted through the bore 140 and hole 145 to secure the springs 138 in place. The bore 140 and/or hole 145 may be threaded in order to retain the spring 138 and hold pad 122 in place. As can be seen from Figure 6, a cutaway or slot 142 may be provided in the end face pad 137 of the backplate 134 and friction material 136 to permit the pad 122 to slide in and out of the paper when viewed in Figure 6 to contact the rotor 120 of the brake assembly 110 in use.

It should be appreciated that, unlike prior art pad springs, pad springs of the present invention are fitted directly to the carrier 112 of a disc brake, rather than being restrained by a pad strap that is in turn secured to the housing 114 and bridge 116 of the brake. It should also be appreciated that the width of the pad springs 138 should be sufficient to retain the pads 122 throughout the entire extent of their travel towards the rotor 120 as the friction material is progressively worn away.

The interaction of support leg 148 with spring portion with spring portion 150 achieves the same or similar resilient pad retaining effect as the prior art pad spring and strap arrangement. It should further be appreciated that the arrangement shown in Figure 6 permits pad 122 to be replaced whilst the brake assembly 110 remains fitted to the vehicle since the opening 132 in the carrier 112 is normally accessible when fitted, as is the outer opening of bore 140 on the carrier 112.

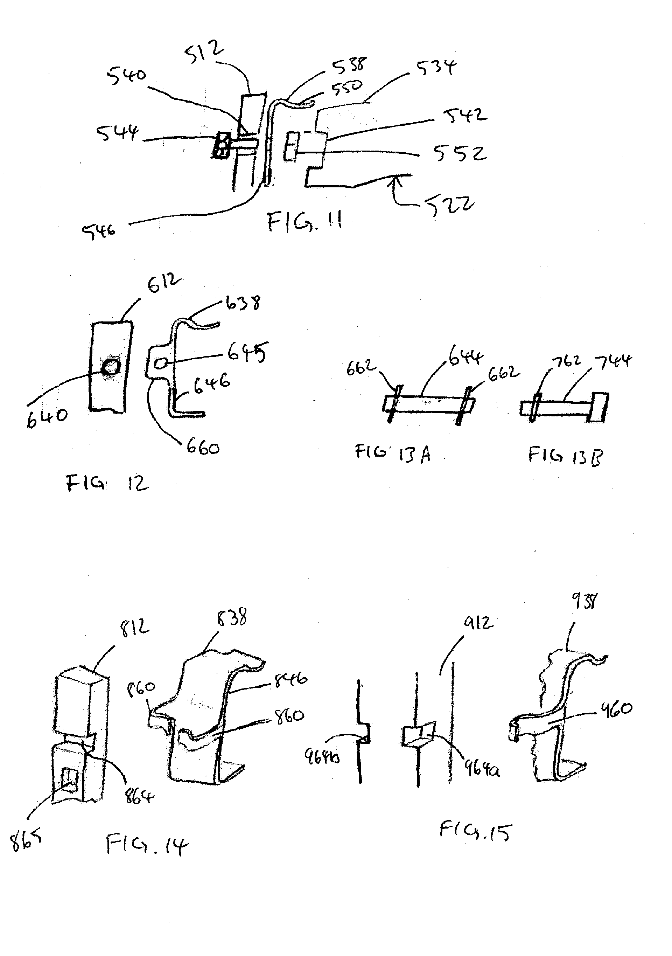

Turning now to Figure 8, a pad spring according to a second embodiment of the present invention is shown with like parts being designated by like numerals with the addition of the prefix "2". It can be seen that in this embodiment, through hole 245 has been formed with a lip 247 turned towards the backplate 234 that has been threaded using a swaging process or the like, thereby providing a greater amount of threaded area on the spring to achieve a more secure connection to the carrier 212. Again, a slot 242 is provided in the pad 122 to accommodate the bolt 244 and lip 247. As an alternative, the lip may be turned away from the backplate 234, with a vertical slot being provided in the carrier 212 to enable the spring 238 to be slid in vertically, thereby negating the need for a slot 242 in the pad.

Turning to Figure 9 which illustrates a third embodiment of the present invention in which like parts are again designated by like numerals but with the prefix "3". In this embodiment a nut 352 is used to secure the spring 338 to the carrier 312. To simplify the fitting procedure, the slot 342 is preferably dimensioned so as to prevent rotation of the nut as it is secured to the bolt 344 whilst still permitting sliding movement of pads 322 towards the rotor whilst fitted.

An alternative to the nut 352 is illustrated in Figure 10. In this embodiment two through bores (not shown) are provided in the carrier through which two bolts are fitted. Plate 456 having two threaded apertures 457 that are mutually spaced by the same distance as the through bores on the carrier replaces two nuts that would otherwise secure the spring to the carrier.

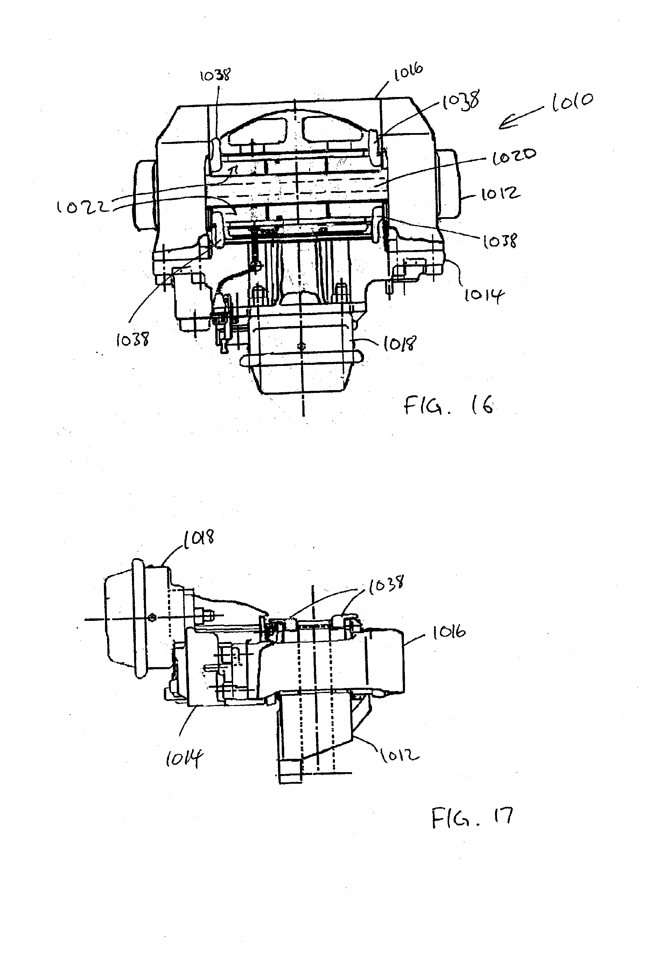

A fifth embodiment of the present invention is illustrated by Figure 11 in which the pad support leg has been omitted with nut 552 or a nut plate similar to that of Figure 10 being used to resist radially inward movement of the pad 522 by virtue of its engagement in slot 542.

Turning to Figures 12, 13A and 13B in which like parts are designated by like numerals with the addition of the prefix "6", an alternative securement arrangement of the spring 638 is shown. In this embodiment the through bore 640 extends in the direction into the paper as shown in Figure 12, with a pair of corresponding holes 645 being provided on a pair of wings 660 extending towards the carrier 612 from vertical edges of the vertical abutment surface 646. The carrier 612 and spring 638 are then secured together by pin 644 of Figure 13A with axial movement thereof being restricted by a pair of clips 662. Alternatively, through bore 640 may be threaded and bolt 744 of Figure 13B used for securement with a single clip 762 being used to prevent the pin 744 working loose.

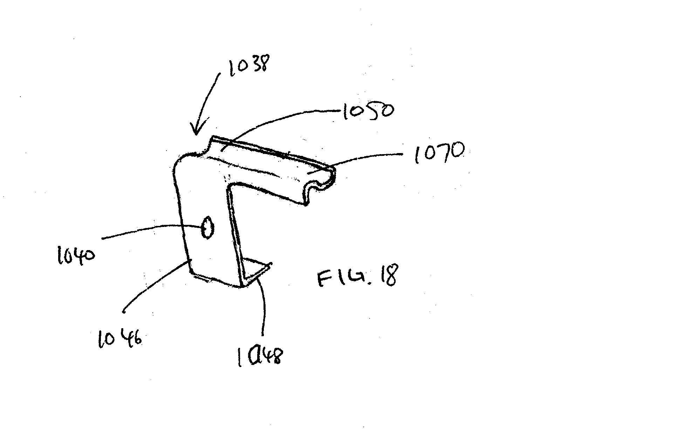

Figures 14 and 15 illustrate eighth and ninth embodiments of the present invention respectively. In these embodiments the pad springs 838 and 938 clip into place on the carrier 812 and 912, with a pair of resilient spring legs 860, 960 extending from the clip to engage with either slot 864 recess 865 (shown for convenience on the same Figure as slot 864) or cut-outs 964a and 964b, thereby dispensing with the need to have a spanner or the like for fitting. In order to ease fitment, the upper end of carrier 812, 912 may be tapered such that the spring legs 860, 960 slide easily onto the carrier.

A tenth embodiment of the present invention is shown in Figure 16, 17 and 18. Again, in this embodiment springs 1038 are fitted at each end of a pad 1022, but the spring portion 1050 comprises an extension 1070. As can be seen from Figure 16 and 17, this is arranged to extend over the bridge 1016 and/or housing 1014 of the brake. The bridge 1016 and housing 1014 are thereby resiliently loaded against the carrier 1012. This acts to minimise rattle of the bridge and housing that may otherwise occur due to play in the slidable mounting of the bridge/housing 1016/1014 on the carrier 1012.

It is apparent that the pad springs of the present invention have a number of advantages over prior art springs; the need for hardening of carrier abutments is eliminated since impact loading of the brake pads is taken by the abutment and/or support surfaces of the pad spring rather than the carrier directly, because the spring element is self contained in the pad support the need for a separate means for retaining the pads is eliminated. Furthermore by eliminating the retaining pad strap and bolt, more clearance between the brake and wheel is created, potentially allowing more material to be added to the casting for the bridge, thereby permitting the brake to be strengthened. In addition the pad springs enable brake pads to be fitted and removed in a radial direction whilst the brake is assembled, particularly whilst the caliper is assembled to the carrier.

It should be appreciated that the various terms used to describe the orientation of the various components has been used for convenience and ease of explanation, and that brakes incorporating springs according to the present invention may be fitted in numerous orientations on a particular vehicle. It must also be appreciated that numerous changes may be made within the scope of the present invention. For example, the extended spring portion may be applied to springs having any one of the various means of attachment disclosed in the preceding embodiments and a variety of the features such as the removal of the support leg may be combined with features of the other embodiments. Furthermore, the pad spring may be used in conjunction with a standard pad spring to retain brake pads in a radially inward direction only and not a radially outward direction. An advantage of this configuration is that it may protect the abutment regions of the brake carrier, thereby potentially negating the need for these regions to be hardened, and thus potentially reducing manufacturing costs, and/or extending the service life of the carrier.

## Claims

1. A pad spring (138) for fitment to a brake carrier (112) of a disc brake (1010) so as to be capable of resiliently restraining one end of a disc brake pad (135) in the carrier from movement in a radially outward and/or inward direction.

2. A pad spring (138) according to claim 1 further comprising an abutment surface (146, 148) arranged so as to be capable of supporting one end of the pad and restraining circumferential and/or radially inward movement thereof.

3. A pad spring according to claim 1 or claim 2 comprising an abutment surface (148) arranged so as to be capable of supporting one end of the pad and the pad spring (138) restraining radially outward movement thereof.

4. A pad spring according to any preceding claim wherein the pad spring (138) is configured to permit a brake disc pad to be mounted to a brake disc carrier (112) in a radially inward direction with the pad spring (138) fitted thereto and whilst a disc brake comprising the carrier and a caliper is in an assembled state.

5. A pad spring according to any preceding claim wherein the spring is releasably securable to the carrier.

6. A pad spring according to claim 5 wherein the spring is releasably securable to the carrier by a fixing such as a bolt (244), clip (860), pin or screw.

7. A pad spring according to claim 5 wherein the spring is releasably securable to the carrier by integral clip means (860).

8. A pad spring according to any preceding claim wherein a spring portion (150) of the pad spring is arranged to be engageable with a radially outer face of the pad and is capable of resiliently retaining one end of the pad in the carrier.

9. A pad spring according to claim 8 wherein the spring portion (150) extends generally parallel to the plane of the radial abutment surface so as to be capable of resting on a caliper of a brake when fitted thereto to resiliently load the caliper against a brake carrier.

10. A pad spring according to any one of claims 2 to 9 wherein at least one abutment surface is harder or softer than a backplate (134) of the brake pad with which the abutment surface is configured to contact to provide a wearing surface.

11. A disc brake carrier assembly comprising a disc brake carrier, and at least one disc brake pad retained therein by two pad springs according to any one of claims 1 to 10.

12. An assembly according to claim 11 wherein an end edge of the or each pad is provided with a cutaway portion arranged to receive a fixing.

13. An assembly according to claim 11 wherein the cutaway portion is arranged so as to permit the or each pad to slide substantially perpendicular to the plane of its friction surface.

14. A kit of parts comprising a disc brake pad and two pad springs according to any one of claims 1 to 10.

15. A kit of parts according to claim 14 when dependent upon claim 6 wherein an end edge of the brake pad is provided with a cutaway portion arranged to receive a fixing.
